# FASCICULE DE BREVET EUROPEEN

(11) **EP 3 387 300 B1**
(45) Date de publication et mention de la délivrance du brevet: **03.08.2022**
(21) Numéro de dépôt: 16815627.1
(22) Date de dépôt: 07.12.2016
(51) Int. Cl.: F16K 5/06

(54) **VANNE POUR RÉSERVOIR DE STOCKAGE D'HEXAFLUORURE D'URANIUM**
VENTIL FÜR URANHEXAFLUORID-LAGERTANK
VALVE FOR URANIUM HEXAFLUORIDE STORAGE TANK

(30) Priorité: 08.12.2015 FR 1561993
(43) Date de publication de la demande: 17.10.2018
(73) Titulaire: Daher Valves, 26240 Saint Vallier (FR)
(72) Inventeur: ARTRU, Patrick, 07340 Peaugres (FR)
(74) Mandataire: Germain Maureau
(86) Numéro de dépôt international: PCT/FR2016/053258
(87) Numéro de publication internationale: WO 2017/098152

(56) Documents cités:
- FR-A- 1 345 829
- GB-A- 2 020 394
- US-A- 3 288 498

## Description

La présente invention concerne une vanne pour réservoir de stockage d'hexafluorure d'uranium (UF₆).

Avant d'être utilisé comme combustible dans le domaine de l'industrie nucléaire, l'hexafluorure d'uranium est classiquement stocké dans des réservoirs ayant une ouverture fermée par une vanne.

Pour éviter tout risque de fuite d'hexafluorure d'uranium hors du réservoir, ces vannes pour réservoir de stockage d'hexafluorure d'uranium doivent offrir une étanchéité de qualité.

Les vannes existantes pour réservoir de stockage d'hexafluorure d'uranium sont traditionnellement de type vanne à pointeau, c'est-à-dire comprenant classiquement une vis pointeau mobile en translation dans le corps de la vanne, entre une position de fermeture dans laquelle l'extrémité de la vis pointeau vient en applique contre un siège formé dans le corps de vanne, et une position d'ouverture dans laquelle l'extrémité de la vis pointeau est à distance du siège et met en communication la partie de la vanne raccordée au cylindre de stockage avec une conduite de sortie sensiblement perpendiculaire au corps de la vanne.

En outre, la partie de la vanne raccordée au cylindre de stockage d'hexafluorure d'uranium subit classiquement un étamage pour éviter une corrosion et garantir ainsi une certaine étanchéité entre le cylindre de stockage et la vanne.

Ces vannes existantes offrent une étanchéité de qualité, mais présentent cependant plusieurs risques de fuite, interne et externe, en cas de choc.

En effet, à l'intérieur de la vanne, l'étanchéité est assurée par un contact linéique métal - métal rigide entre une extrémité de la vis pointeau et le siège formé dans le corps de la vanne.

Cela impose donc de fermer la vanne en exerçant sur la vis pointeau un couple de serrage minimum. Si le serrage n'est pas suffisant, il existe un risque de desserrage et fuite vers la conduite de sortie.

De plus, comme les surfaces en contact de la vis pointeau et du siège sont rigides et métalliques, de légères déformations de ces surfaces en contact peuvent apparaître lors d'un choc. Ces déformations sont susceptibles de générer des lignes de fuite.

Par ailleurs, l'hexafluorure d'uranium peut cristalliser à l'intérieur du cylindre de stockage et de la partie de la vanne raccordée au cylindre de stockage. Or, les cristaux d'hexafluorure d'uranium ont une dureté élevée, si bien qu'en cas de choc, ces cristaux d'hexafluorure d'uranium peuvent dégrader le siège ou la portée contre lesquels ils sont projetés. Cela peut donc aussi générer des lignes de fuite interne au niveau de l'interface vis pointeau - siège.

Enfin, l'étamage est aussi exposé à un risque de détérioration. Le cas échéant, cela peut également générer des lignes de fuite entre le réservoir de stockage et la vanne. Une vanne générique est connue par le document GB 2 020 394 A.

Aussi, la présente invention vise à pallier tout ou partie de ces inconvénients en proposant une vanne pour réservoir de stockage d'hexafluorure d'uranium, offrant une étanchéité améliorée, y compris en cas de chocs ou vibrations.

A cet effet, la présente invention a pour objet une vanne pour réservoir de stockage d'hexafluorure d'uranium, comprenant un corps de vanne, le corps de vanne délimitant un conduit et présentant une partie de raccord où débouche une extrémité du conduit, la partie de raccord étant destinée à être raccordée au réservoir de stockage, a vanne comprenant
un organe de serrage monté mobile sur la partie de raccord entre une position de desserrage dans laquelle l'organe de serrage est destiné à permettre une désolidarisation de la partie du raccord du réservoir de stockage et une position de serrage dans laquelle l'organe de serrage est destiné à maintenir la partie de raccord fixée au réservoir de stockage,
un organe d'obturation mobile en rotation dans le conduit entre une position de fermeture dans laquelle l'organe d'obturation obture le conduit et une position d'ouverture dans laquelle l'organe d'obturation libère un passage à travers le conduit,
deux sièges interposés entre l'organe d'obturation et le corps de vanne, et
des moyens élastiques de rappel configurés pour maintenir les sièges et l'organe d'obturation en appui, et en ce que
le conduit présente une portion coudée, la portion coudée étant agencée entre la partie de raccord et l'organe d'obturation, les moyens élastiques de rappel étant positionnés entre la partie coudée et l'organe d'obturation.

Ainsi, la vanne selon l'invention offre une étanchéité améliorée, y compris en cas de choc.

En effet, l'organe de serrage évite un desserrage accidentel de la vanne par rapport au réservoir de stockage.

Les sièges sont distincts du corps de vanne, ce qui permet de le maintenir en appui constant contre l'organe d'obturation, y compris en cas de choc.

Aussi, la portion coudée évite qu'en cas de choc les cristaux d'hexafluorure d'uranium soient projetés contre les sièges ou l'organe d'obturation. A la place, ces cristaux sont projetés contre la paroi coudée du conduit. Cela évite de dégrader les sièges ou l'organe d'obturation et donc d'altérer l'étanchéité offerte par la vanne selon l'invention.

Le fait d'avoir un organe d'obturation en appui contre deux sièges a l'avantage de réaliser une double étanchéité au niveau de l'organe d'obturation et donc d'améliorer l'étanchéité offerte par la vanne.

Selon un mode de réalisation préféré, les sièges comprennent un matériau souple.

Ainsi, les sièges maintiennent un contact étanche avec l'organe d'obturation même en cas de choc et de déformations légères.

Selon un mode de réalisation préféré, la vanne comprend des moyens d'étanchéité double.

Cette caractéristique a l'avantage d'améliorer l'étanchéité.

Les moyens d'étanchéité double assurent une double étanchéité axiale et/ou radiale par rapport au conduit.

Les moyens d'étanchéité double peuvent comprendre au moins un joint d'étanchéité configuré pour assurer à la fois une étanchéité axiale et une étanchéité radiale. Les deux joints d'étanchéité axiaux et radiaux peuvent donc comprendre un joint d'étanchéité commun. Ainsi, l'étanchéité de la vanne est sensiblement améliorée, avec un coût et un encombrement restreints.

Selon un mode de réalisation préféré, les moyens d'étanchéité double comprennent au moins une première barrière d'étanchéité en un premier matériau, et une deuxième barrière d'étanchéité en un deuxième matériau distinct du premier matériau.

Cela améliore l'efficacité de l'étanchéité, notamment dans la durée.

Selon un mode de réalisation préféré, la vanne comprend un organe de commande destiné à être actionné par un utilisateur pour commander l'ouverture ou la fermeture de la vanne, et un réducteur reliant l'organe de commande et l'organe d'obturation.

Ces caractéristiques permettent un meilleur contrôle du couple pour ouvrir ou fermer la vanne, et donc améliorent la précision du déplacement de l'organe d'obturation entre les positions d'ouverture et de fermeture. Ces caractéristiques permettent aussi de minimiser un déplacement de l'organe d'obturation en cas de déplacement accidentel de l'organe de commande. L'étanchéité est ainsi améliorée.

Selon un mode de réalisation préféré, la vanne comprend un organe de commande destiné à être actionné par un utilisateur pour commander l'ouverture ou la fermeture de la vanne, l'organe de commande étant intégralement contenu dans le corps de vanne ou le cas échéant le réducteur.

En d'autres termes, l'organe de commande ne fait pas saillie hors de la vanne, ce qui limite les risques de déplacement accidentel de cet organe de commande. Cela contribue donc à améliorer l'étanchéité, y compris en cas de choc.

Selon un mode de réalisation préféré, la vanne comprend des moyens de mesure de la température du conduit.

Cette caractéristique permet de contrôler la température de l'hexafluorure d'uranium et éviter ainsi qu'il cristallise, notamment pendant un transvasement.

D'autres caractéristiques et avantages de la présente invention ressortiront clairement de la description détaillée ci-après d'un mode de réalisation, donné à titre d'exemple non limitatif, en référence aux dessins annexés dans lesquels :
- La figure 1 est une vue en coupe d'une vanne selon un mode de réalisation de l'invention,
- La figure 2 est une vue en coupe d'une vanne selon un mode de réalisation de l'invention,
- La figure 3 est une vue en perspective d'une vanne selon un mode de réalisation de l'invention,
- La figure 4 est une vue en coupe partielle d'une vanne selon un mode de réalisation de l'invention,
- La figure 5 est une vue en perspective d'une vanne selon un mode de réalisation de l'invention.

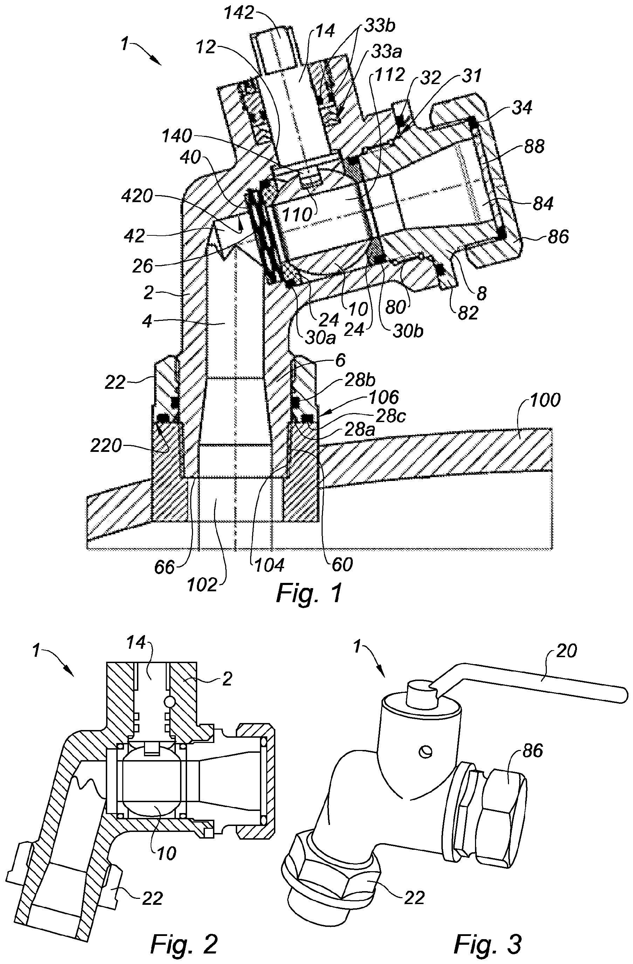

La figure 1 montre une vanne 1 pour un cylindre ou réservoir 100 de stockage d'hexafluorure d'uranium.

La vanne 1 comprend un corps 2 de vanne qui délimite un conduit 4 intérieur, débouchant d'une part au niveau d'une partie 6 de raccord destinée à être raccordée au réservoir 100 de stockage, et d'autre part au niveau d'une partie 8 de sortie par laquelle est destiné à sortir l'hexafluorure d'uranium lors d'une utilisation de la vanne 1. La vanne 1 comprend un organe d'obturation 10 agencé en travers du conduit 4, cet organe 10 d'obturation étant mobile uniquement en rotation dans le conduit 4, notamment autour d'un axe sensiblement orthogonal à la partie de conduit 4 logeant l'organe 10 d'obturation, entre une position d'ouverture (figure 1) dans laquelle l'organe 10 d'obturation libère un passage pour la circulation d'hexafluorure d'uranium depuis la partie 6 de raccord jusqu'à la partie 8 de sortie, et une position de fermeture (non représentée) dans laquelle l'organe 10 d'obturation obture le conduit 4.

La partie 6 de raccord est par exemple destinée à être insérée dans une ouverture 102 du réservoir 100. En particulier, la partie 6 de raccord peut comprendre un filetage 60, ici extérieur, destiné à coopérer avec un filetage 104 complémentaire ménagé ici à l'intérieur de l'ouverture 102.

La partie 8 de sortie peut être une pièce distincte du corps 2 de vanne, pour permettre le montage de l'organe 10 d'obturation dans le corps 2 de vanne. La partie 8 de sortie est de préférence fixée au corps 2 de vanne par l'intermédiaire d'un filetage 80 coopérant avec un filetage complémentaire du corps 2 de vanne. Une butée 82 de serrage peut être prévue pour arrêter le déplacement de la partie 8 de sortie relativement au corps 2 de vanne.

La partie 8 de sortie délimite une partie du conduit 4, et présente un orifice 84 de sortie avantageusement obturé par un bouchon 86.

Le corps 2 de vanne délimite aussi un logement 12, ce logement 12 débouchant à l'intérieur du conduit 4, et plus précisément à l'intérieur de la partie de conduit 4 logeant l'organe 10 d'obturation. Le logement 12 s'étend ici de manière sensiblement orthogonale à la partie de conduit 4 logeant l'organe 10 d'obturation.

La vanne 1 comprend un organe 14 de commande, par exemple une tige de commande, qui est logé à l'intérieur du logement 12 et qui est mobile, notamment en rotation, à l'intérieur du logement 12.

L'organe 14 de commande comprend des moyens d'entraînement configurés pour entraîner une rotation de l'organe 10 d'obturation lors d'un déplacement de l'organe 14 de commande.

Cet entraînement peut être direct, comme illustré sur la figure 1, où les moyens d'entraînement comprennent un tenon 140, ici rattaché à l'organe 14 de commande, emboîté dans une mortaise 110 ici ménagée sur l'organe 10 d'obturation. Selon l'exemple de la figure 1, l'organe 14 de commande et l'organe 10 d'obturation sont solidaires en rotation.

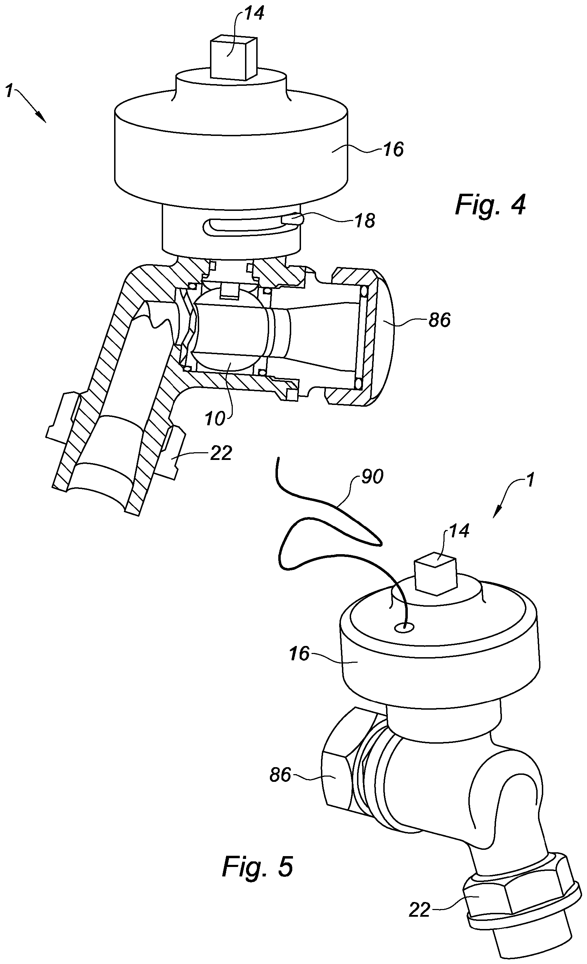

L'entraînement peut être indirect, comme illustré sur la figure 4 où les moyens d'entraînement comprennent un réducteur 16, par exemple un train épicycloïdal, reliant l'organe 14 de commande à l'organe 10 d'obturation, en réduisant le rapport de vitesse de rotation entre l'organe 14 de commande et l'organe 10 d'obturation, de sorte qu'une rotation d'un tour de l'organe 14 de commande entraîne une rotation d'une fraction de tour prédéterminée de l'organe 10 d'obturation. Par exemple, un quart de tour de l'organe 10 d'obturation peut correspondre à dix tours de l'organe 14 de commande.

Par ailleurs, comme illustré sur la figure 4, la vanne 1 peut avantageusement comprendre des moyens d'indication de position configurés pour indiquer la position de l'organe 10 d'obturation. Ces moyens d'indication sont visibles depuis l'extérieur pour un opérateur de sorte que cet opérateur peut vérifier visuellement que l'organe 10 d'obturation est bien en position de fermeture et donc que la vanne 1 est fermée. Cela apporte une garantie supplémentaire pour s'assurer de l'étanchéité de la vanne 1. Les moyens d'indication de position peuvent être avantageusement solidaires en rotation avec l'organe 10 d'obturation, de sorte qu'une fraction de tour de l'organe 10 d'obturation corresponde à une même fraction de tour des moyens d'indication de position.

Les moyens d'indication de position peuvent comprendre un doigt 18 mobile concomitamment à l'organe 10 d'obturation, ou une marque, par exemple une rainure 142 ménagée à une extrémité apparente de l'organe 14 de commande.

On notera que l'organe 14 de commande est de préférence intégralement contenu dans le corps 2 de vanne, comme cela est visible sur la figure 2, ou le cas échéant le réducteur 16. Ainsi, l'organe 14 de commande ne fait pas saillie hors du corps 2 de vanne, ce qui évite que cet organe 14 de commande accroche ou bute contre un élément extérieur au risque d'entraîner un déplacement accidentel de celui-ci et par conséquent de l'organe 10 d'obturation.

Avantageusement, l'organe 14 de commande est conformé pour être actionné par l'intermédiaire d'un outil ou clé 20, visible sur la figure 3, ce qui limite aussi un risque déplacement par inadvertance de l'organe 14 de commande. En particulier, une extrémité de l'organe 14 de commande peut présenter une forme complémentaire de celle de l'outil ou clé 20.

Comme illustré sur la figure 1, la vanne 1 comprend un organe 22 de serrage, comme par exemple un contre-écrou, destiné à sécuriser la fixation de la vanne 1, plus précisément de la partie 6 de raccord, sur le réservoir 100.

En particulier, l'organe 22 de serrage comprend une surface 220 de serrage destiné à venir en appui contre une surface 106 périphérique de l'ouverture 102 du réservoir 100.

L'organe 22 de serrage s'étend autour de la partie 6 de raccord. L'organe 22 de serrage est monté mobile par rapport à la partie 6 de raccord, entre une position de desserrage (figure 2) dans laquelle l'organe 22 de serrage est destiné à permettre une désolidarisation de la partie 6 du raccord par rapport au réservoir 100, et une position de serrage (figure 1) dans laquelle l'organe 22 de serrage est destiné à maintenir la partie 6 de raccord fixée au réservoir 100.

En position de serrage, l'organe 22 de serrage empêche une rotation accidentelle de la vanne 1, notamment la partie 6 de raccord, par rapport au réservoir 100.

En position de serrage, l'organe 22 de serrage est plus proche d'une extrémité 66 de la partie 6 de raccord que dans la position de desserrage.

En position de serrage, la surface 220 de serrage est en appui contre le réservoir 100.

L'organe 22 de serrage est ici mobile en rotation et translation par rapport à la partie 6 de raccord, de sorte qu'une rotation de l'organe 22 de serrage autour de la partie 6 de raccord entraîne un déplacement de l'organe de serrage le long de celle-ci. Cela permet de presser la surface 220 de serrage contre le réservoir afin de garantir l'étanchéité d'une part, et de sécuriser la fixation de la partie 6 de raccord sur le réservoir 100 d'autre part, en empêchant un dévissage accidentel de la partie 6 de raccord.

De fait, la partie 6 de raccord comprend ici un deuxième filetage, extérieur, destiné à coopérer avec un filetage, intérieur, de l'organe 22 de serrage, de sorte que l'organe 22 de serrage et la partie 6 de raccord sont liés par une liaison de type hélicoïdale permettant un déplacement de l'organe 22 de serrage le long de la partie 6 de raccord et un serrage contre le réservoir 100.

La vanne 1 comprend deux sièges 24 qui sont interposés entre l'organe 10 d'obturation et le corps 2 de vanne. Les sièges 24 sont donc distincts du corps 2 de vanne.

Selon l'exemple de réalisation préféré de la figure 1, les sièges 24 permettent de réaliser une double étanchéité.

De préférence, les sièges 24, sont en matériau souple, élastiquement déformable. A titre d'exemple, les sièges 24 sont en polytétrafluoroéthylène (PTFE).

Les sièges 24, sont en appui constant contre l'organe 10 d'obturation.

De plus, la vanne 1 comprend des moyens élastiques de rappel, comme par exemple une rondelle ressort 26, destinés à maintenir les sièges 24 en appui contre l'organe 10 d'obturation.

Plus particulièrement, les moyens élastiques de rappel peuvent être interposés entre un épaulement 40 du conduit 4, sur lequel ils prennent appui, et les sièges 24 sur lesquels ils exercent un effort sensiblement axial, c'est-à-dire sensiblement parallèle à la direction dans laquelle s'étend la partie de conduit 4 abritant l'organe 10 d'obturation.

On notera que la vanne 1 est avantageusement une vanne de type vanne à boisseau. L'organe 10 d'obturation peut présenter une forme conique, ou cylindrique, ou de préférence sphérique comme illustré sur les figures. Ainsi, la vanne 1 est avantageusement une vanne à boisseau sphérique, l'organe 10 d'obturation est une sphère. En conséquence, les contacts des sièges 24 et de l'organe 10 d'obturation sont avantageusement de type sphère - sphère, ce qui améliore sensiblement l'étanchéité, en particulier quand les sièges 24 sont souples.

Le boisseau ou organe 10 d'obturation peut présenter un conduit 112 débouchant sur deux ouvertures. Ce conduit 112 est par exemple sensiblement rectiligne ; les deux ouvertures sont de préférence diamétralement opposées. En position de fermeture, les ouvertures débouchent sur une paroi du conduit 4; le conduit 112 est par exemple sensiblement orthogonal au conduit 4. En position d'ouverture, les ouvertures de l'organe 10 d'obturation débouchent à l'intérieur du conduit 4, ce qui permet à l'hexafluorure d'uranium de circuler à travers le conduit 112 et passer ainsi de la partie 6 de raccord à la partie 8 de sortie ; le conduit 112 est par exemple sensiblement parallèle au conduit 4. Ainsi, la vanne 1 est de type quart de tour, c'est-à-dire qu'une rotation de l'organe 10 d'obturation d'un quart de tour est nécessaire pour passer de la position d'ouverture à la position de fermeture ou inversement.

On remarquera que le conduit 4 présente une portion 42 coudée, et cette portion 42 coudée est agencée entre la partie 6 de raccord et l'organe 10 d'obturation. Ainsi, l'organe 10 d'obturation est décalé par rapport à la direction dans laquelle s'étend la partie de conduit 4 délimité par la partie 6 de raccord. L'ouverture du conduit 4 délimitée par la partie 6 de raccord et l'organe 10 d'obturation ne sont pas en regard. Cela protège l'organe 10 d'obturation et les sièges 24 des cristaux d'hexafluorure d'uranium qui pourrait être projetés lors d'un choc, ces cristaux butant à la place sur la paroi intérieure 420 de la portion 42 coudée.

De préférence, la partie coudée 42 forme un angle compris entre 90° et 115°, par exemple de l'ordre de 105°, c'est-à-dire que la partie de conduit 4 délimité par la partie 6 de raccord et la partie de conduit 4 abritant l'organe 10 d'obturation forme un angle compris entre 90° et 115°, par exemple de l'ordre de 105°. Cela permet de protéger efficacement l'organe 10 d'obturation et les sièges 24 de la projection éventuelle de cristaux d'hexafluorure d'uranium tout en offrant une facilité de raccordement d'une conduite à la partie 8 de sortie.

On notera que les moyens élastiques de rappel sont positionnés entre la partie coudée 42 et l'organe 10 d'obturation.

De manière avantageuse, la vanne 1 comprend des moyens d'étanchéité double. Les moyens d'étanchéité double sont configurés pour former une double barrière d'étanchéité au niveau des zones sensibles, à savoir le cas échéant entre l'organe 22 de serrage et la partie 6 de raccord, entre l'organe 10 d'obturation et le corps 2 de vanne, entre l'organe 14 de commande et le corps 2 de vanne, entre la partie 8 de sortie et le corps 2 de vanne, et entre la partie 8 de sortie et le bouchon 86.

Ainsi, les moyens d'étanchéité double comprennent un premier ensemble d'organes 24, 28a, 33a, 31, 88 d'étanchéité, formant une première barrière d'étanchéité au niveau des zones sensibles, et un deuxième ensemble d'organes 30a, 30b, 33b, 32, 34, 28b et 28c d'étanchéité, formant une deuxième barrière d'étanchéité. La deuxième barrière d'étanchéité double la première barrière d'étanchéité, et lui succède. Cette deuxième barrière d'étanchéité est donc agencée au niveau des mêmes zones sensibles que la première barrière.

Le premier ensemble d'organes d'étanchéité comprend les sièges 24 interposés entre l'organe 10 d'obturation et le corps 2 de vanne, un joint 28a d'étanchéité agencé entre l'organe 22 de serrage et la partie 6 de raccord, une garniture 33a d'étanchéité interposée entre l'organe 14 de commande et le corps 2 de vanne, notamment entre l'organe 14 de commande et une paroi intérieur du logement 12, un joint 31 d'étanchéité interposé entre la partie 8 de sortie et le corps 2 de vanne, et un joint 88 de bouchon en forme de disque interposé entre le bouchon 86 et la partie 8 de sortie et obturant l'orifice 84 de sortie.

Le deuxième ensemble d'organes d'étanchéité comprend deux joints 30a, 30b d'étanchéité interposés chacun entre un des sièges 24 et le corps 2 de vanne, notamment dans une partie concave ou épaulement des sièges 24, deux joints 28b, 28c d'étanchéité agencés respectivement entre l'organe 22 de serrage et la partie 6 de raccord et entre l'organe 22 de serrage et le réservoir 100, une paire de joints 33b d'étanchéité interposés entre l'organe 14 de commande et le corps 2 de vanne, notamment entre l'organe 14 de commande et une paroi intérieur du logement 12, un joint 32 d'étanchéité interposé entre la partie 8 de sortie et le corps 2 de vanne, plus précisément entre la butée 82 de serrage et le corps 2 de vanne, et un joint 34 d'étanchéité interposé entre le bouchon 86 et la partie 8 de sortie, autour du joint 88 de bouchon.

Au niveau de la partie 6 de raccord, de l'organe 22 de serrage et du réservoir 100, le joint 28a d'étanchéité de la première barrière assure à la fois une étanchéité axiale, avec le joint 28b d'étanchéité de la deuxième barrière, et radiale, avec le joint 28c d'étanchéité de la deuxième barrière. Le premier joint 28a d'étanchéité est destiné à venir en appui à la fois contre la partie 6 de raccord et contre le réservoir 100, le deuxième joint 28b d'étanchéité est en appui contre la partie 6 de raccord, et le troisième joint 28c d'étanchéité est destiné à venir en appui contre le réservoir 100.

Le premier joint 28a d'étanchéité est avantageusement situé à une intersection d'une paroi intérieure de l'organe 22 de serrage et de la surface 220 de serrage, par exemple fixé à un chanfrein de l'organe 22 de serrage. Le deuxième joint 28b d'étanchéité est par exemple logé dans une gorge ménagée dans la paroi intérieure de l'organe 22 de serrage. Le troisième joint 28c d'étanchéité est par exemple logé dans une rainure ménagée dans la surface 220 de serrage.

De préférence, les organes d'étanchéité formant la première barrière d'étanchéité sont en polytétrafluoroéthylène (PTFE), tandis que les organes d'étanchéité formant la deuxième barrière d'étanchéité sont en matériau élastomère.

Comme illustré sur la figure 5, la vanne 1 peut avantageusement comprendre des moyens de mesure de la température du conduit 4, afin de contrôler et éviter la formation de cristaux d'hexafluorure d'uranium. Les moyens de mesure de température comprennent par exemple une sonde 90 de température et sont situés dans un boitier additionnel.

Bien entendu, l'invention n'est nullement limitée au mode de réalisation décrit ci-dessus, ce mode de réalisation n'ayant été donné qu'à titre d'exemple. Des modifications sont possibles, notamment du point de vue de la constitution des divers éléments ou par la substitution d'équivalents techniques, sans sortir pour autant du domaine de protection de l'invention.

## Revendications

1. Vanne (1) pour réservoir (100) de stockage d'hexafluorure d'uranium, comprenant un corps (2) de vanne, le corps (2) de vanne délimitant un conduit (4) débouchant d'une part au niveau d'une partie (6) de raccord destinée à être raccordée au réservoir (100) de stockage, et d'autre part au niveau d'une partie (8) de sortie par laquelle est destiné à sortir l'hexafluorure d'uranium, la vanne (1) comprenant
un organe (22) de serrage monté mobile sur la partie (6) de raccord entre une position de desserrage dans laquelle l'organe (22) de serrage est destiné à permettre une désolidarisation de la partie (6) du raccord du réservoir (100) de stockage et une position de serrage dans laquelle l'organe (22) de serrage est destiné à maintenir la partie (6) de raccord fixée au réservoir (100) de stockage,
un organe (10) d'obturation mobile en rotation dans le conduit (4) entre une position de fermeture dans laquelle l'organe (10) d'obturation obture le conduit (4) et une position d'ouverture dans laquelle l'organe (10) d'obturation libère un passage à travers le conduit (4),
deux sièges (24) interposés entre l'organe (10) d'obturation et le corps (2) de vanne, et
des moyens élastiques de rappel configurés pour maintenir les sièges (24) et l'organe (10) d'obturation en appui, et où
le conduit (4) présente une portion (42) coudée, la portion (42) coudée étant agencée entre la partie (6) de raccord et l'organe (10) d'obturation, les moyens élastiques de rappel étant positionnés entre la partie coudée (42) et l'organe (10) d'obturation.

2. Vanne (1) selon la revendication 1, dans laquelle les sièges (24) comprennent un matériau souple.

3. Vanne (1) selon l'une des revendications 1 à 2, dans laquelle la vanne (1) comprend des moyens d'étanchéité double.

4. Vanne (1) selon la revendication 3, dans laquelle les moyens d'étanchéité double comprennent au moins une première barrière (28a, 24, 33a, 31, 88) d'étanchéité en un premier matériau, et une deuxième barrière d'étanchéité (28b, 28c, 30a, 30b, 33b, 32, 34) en un deuxième matériau distinct du premier matériau.

5. Vanne (1) selon l'une des revendications 1 à 4, dans laquelle la vanne (1) comprend un organe (14) de commande destiné à être actionné par un utilisateur pour commander l'ouverture ou la fermeture de la vanne (1), et un réducteur (16) reliant l'organe (14) de commande et l'organe (10) d'obturation.

6. Vanne (1) selon l'une des revendications 1 à 5, dans laquelle la vanne (1) comprend un organe (14) de commande destiné à être actionné par un utilisateur pour commander l'ouverture ou la fermeture de la vanne (1), l'organe (14) de commande étant intégralement contenu dans le corps (2) de vanne ou le cas échéant le réducteur (16).

7. Vanne (1) selon l'une des revendications 1 à 6, dans laquelle la vanne (1) comprend des moyens de mesure de la température du conduit (4).

## Patentansprüche

1. Ventil (1) für Uranhexafluorid-Lagertank (100), umfassend ein Ventilgehäuse (2), wobei das Ventilgehäuse (2) eine Leitung (4) eingrenzt, die einerseits im Bereich eines Anschlussteils (6), der dazu bestimmt ist, an den Lagertank (100) angeschlossen zu werden, und andererseits im Bereich eines Ausgangsteils (8) einmündet, durch den das Uranhexafluorid dazu bestimmt ist, auszutreten, wobei das Ventil (1) umfasst
ein Klemmorgan (22), das an dem Anschlussteil (6) zwischen einer Löseposition, in der das Klemmorgan (22) dazu bestimmt ist, eine Entkoppelung des Anschlussteils (6) von dem Lagertank (100) zu ermöglichen, und einer Klemmposition beweglich montiert ist, in der das Klemmorgan (22) dazu bestimmt ist, den Anschlussteil (6) an dem Lagertank (100) befestigt zu halten,
ein Verschlussorgan (10), das in der Leitung (4) zwischen einer Schließposition, in der das Verschlussorgan (10) die Leitung (4) verschließt, und einer Öffnungsposition, in der das Verschlussorgan (10) einen Durchgang durch die Leitung (4) hindurch freigibt, drehbeweglich ist,
zwei Sitze (24), die zwischen dem Verschlussorgan (10) und dem Ventilgehäuse (2) eingesetzt sind, und
elastische Rückstellmittel, die konfiguriert sind, um die Sitze (24) und das Verschlussorgan (10) anliegend zu halten, und wobei
die Leitung (4) einen gebogenen Abschnitt (42) aufweist, wobei der gebogene Abschnitt (42) zwischen dem Anschlussteil (6) und dem Verschlussorgan (10) angeordnet ist, wobei die elastischen Rückstellmittel zwischen dem gebogenen Abschnitt (42) und dem Verschlussorgan (10) positioniert sind.

2. Ventil (1) nach Anspruch 1, wobei die Sitze (24) einen biegsamen Werkstoff umfassen.

3. Ventil (1) nach einem der Ansprüche 1 bis 2, wobei das Ventil (1) Doppeldichtmittel umfasst.

4. Ventil (1) nach Anspruch 3, wobei die Doppeldichtmittel mindestens eine erste Dichtsperre (28a, 24, 33a, 31, 88) aus einem ersten Werkstoff, und eine zweite Dichtsperre (28b, 28c, 30a, 30b, 33b, 32, 34) aus einem zweiten Werkstoff umfassen, der sich vom ersten Werkstoff unterscheidet.

5. Ventil (1) nach einem der Ansprüche 1 bis 4, wobei das Ventil (1) ein Steuerorgan (14) umfasst, das dazu bestimmt ist, durch einen Nutzer betätigt zu werden, um das Öffnen oder das Schließen des Ventils (1) anzusteuern, und ein Reduzierstück (16), welches das Steuerorgan (14) und das Verschlussorgan (10) verbindet.

6. Ventil (1) nach einem der Ansprüche 1 bis 5, wobei das Ventil (1) ein Steuerorgan (14) umfasst, das dazu bestimmt ist, durch einen Nutzer betätigt zu werden, um das Öffnen oder das Schließen des Ventils (1) anzusteuern, wobei das Steuerorgan (14) vollständig in dem Ventilgehäuse (2), oder gegebenenfalls in dem Reduzierstück (16) enthalten ist.

7. Ventil (1) nach einem der Ansprüche 1 bis 6, wobei das Ventil (1) Mittel zum Messen der Temperatur der Leitung (4) umfasst.

## Claims

1. A valve (1) for an uranium hexafluoride storage tank (100), comprising a valve body (2), the valve body (2) delimiting a pipe (4) opening out, on the one hand, at the level of a connection portion (6) intended to be connected to the storage tank (100), and, on the other hand, at the level of an exit portion (8) through which the uranium hexafluoride is intended to exit, the valve (1) comprising
a clamping member (22) movably mounted on the connection portion (6) between a release position in which the clamping member (22) is intended to allow separation of the connection portion (6) from the storage tank (100) and a clamping position in which the clamping member (22) is intended to hold the connection portion (6) fixed to the storage tank (100),
a shutter member (10) movable in rotation in the pipe (4) between a closed position in which the shutter member (10) shuts off the pipe (4) and an open position in which the shutter member (10) frees a passage through the pipe (4),
two seats (24) interposed between the shutter member (10) and the valve body (2), and
elastic return means configured to hold the seats (24) and the shutter member (10) in abutment, and wherein
the pipe (4) has a bent portion (42), the bent portion (42) being arranged between the connection portion (6) and the shutter member (10), the elastic return means being positioned between the bent portion (42) and the shutter member (10).

2. The valve (1) according to claim 1, wherein the seats (24) comprise a flexible material.

3. The valve (1) according to any of claims 1 and 2, wherein the valve (1) comprises double sealing means.

4. The valve (1) according to claim 3, wherein the double sealing means comprise at least one first sealing barrier (28a, 24, 33a, 31, 88) of a first material, and a second sealing barrier (28b, 28c, 30a, 30b, 33b, 32, 34) of a second material distinct from the first material.

5. The valve (1) according to any of claims 1 to 4, wherein the valve (1) comprises a control member (14) intended to be actuated by a user to control the opening or closing of the valve (1), and a reducer (16) connecting the control member (14) and the shutter member (10).

6. The valve (1) according to any of claims 1 to 5, wherein the valve (1) comprises a control member (14) intended to be actuated by a user to control the opening or closing of the valve (1), the control member (14) being fully contained in the valve body (2) or, if appropriate, the reducer (16).

7. The valve (1) according to any of claims 1 to 6, wherein the valve (1) comprises means for measuring the temperature of the pipe (4).
